# EUROPÄISCHE PATENTSCHRIFT

(11) **EP 0 580 088 B1**
(45) Veröffentlichungstag und Bekanntmachung des Hinweises auf die Patenterteilung: **22.01.1997**
(21) Anmeldenummer: 93111435.9
(22) Anmeldetag: 16.07.1993
(51) Int. Cl.: A01B 61/04

(54) **Grubber**
Grubber
Outil d'ameublissement

(30) Priorität: 17.07.1992 NO 922832
(43) Veröffentlichungstag der Anmeldung: 26.01.1994
(73) Patentinhaber: KVERNELAND KLEPP AS, N-4344 Kvernaland (NO)
(72) Erfinder: Skjaveland, Magne, N-4062 Klepp St. (NO)
(74) Vertreter: König, Reimar, Dr.-Ing.

(56) Entgegenhaltungen:
- WO-A-90/03722
- DE-A- 2 910 621
- FR-A- 2 498 875
- FR-A- 2 605 482
- GB-A- 2 161 053
- US-A- 4 293 043
- US-A- 4 532 790

## Beschreibung

Die Erfindung bezieht sich auf einen Grubber mit um eine Achse verschwenkbar gelagerten Zinken mit hohlkörperförmigem Querschnitt. Ein derartiger Grubber ist in der britischen Offenlegungsschrift 2 161 053 beschrieben.

Der Erfindung liegt das Problem zugrunde, einen Grubber mit einem Zinken zu schaffen, der die notwendige Konstruktionsfestigkeit gewährleistet und die aus dem mit den bekannten Befestigungen verbundenen Spannungskonzentrationen vermeidet.

Ausgehend von dieser Problemstellung wird ein Grubber mit einem Zinken mit einem hohlkörperförmigen Querschnitt vorgeschlagen, der mit in Wandungsöffnungen eingreifenden Lagerzapfen verpreßt ist.

Die Zinken des Grubbers sind weniger materialaufwendig und leichter als herkömmliche Zinken, weisen beim Gebrauch eine geringere Steifigkeit als herkömmliche gefederte Starr-Zinken auf und geben demzufolge etwas nach bzw. weichen aus, wenn sie auf größere Bodenhindernisse stoßen und demgemäß im Vergleich zu herkömmlichen Zinken stärker vibrieren und sich leichter, d.h. mit geringerer Zugkraft durch den Boden bewegen lassen.

Der Zinken kann vorteilhafterweise aus einem Quadratrohr bestehen und eine konische Berührungsfläche zwischen an den Lagerzapfen und der Zinkenwandung aufweisen.

Des weiteren kann der Zinken mittels eines Sicherheitsbolzens in seiner Arbeitslage gehalten und die Schwenkbewegung des Zinkens über ein Federstück begrenzt sein.

Bei dieser Anordnung ist es vorteilhaft, wenn bei einer Schwenkbewegung, die zwischen dem Zinken und dem Sicherheitsbolzen wirksame Kraft durch das Federstück geht und der Zinken bei variierenden Bodenwiderstand im Rahmen der Nachgiebigkeit des Federstücks um die Achse schwenkt.

Wenn zusätzlich eine den Zinken in seine Arbeitslage haltenden Feder vorgesehen ist, kann deren Arbeitsbereich eine Schwenkbewegung des Zinkens und der Achse und ein Ausweichen des Zinkens sowie dessen Rückkehr in der Arbeitslage erlauben.

Der Sicherheitsbolzen ist vorzugsweise verschwenkbar gelagert.

Die Erfindung wird nachfolgend anhand dreier, in der Zeichnung dargestellter Ausführungsbeispiele des näheren erläutert. In der Zeichnung zeigen:
- Fig. 1: den oberen Teil eines Grubber-Zinkens und dessen Aufhängung in einer Vorderansicht und teilweise als Schnitt,
- Fig. 2: einen erfindungsgemäßen Zinken in kleinerem Maßstab und einer Seitenansicht,
- Fig. 3: einen Zinken mit einem Dämpfer in einer Seitenansicht,
- Fig. 4: den Zinken nach Fig. 3 mit aktivem Dämpfer und
- Fig. 5: einen Zinken mit einer Blattfeder in einer Seitenansicht.

Bei allen drei Varianten ist der obere Teil des Zinkens zwischen zwei Platten angeordnet, bei denen es sich um einen Teil des Grubber-Rahmens handelt; er besitzt an seinem unteren Ende ein den Boden bearbeitendes Schar.

Im einzelnen ist der Zinken 1 zwischen zwei Platten 2 angeordnet, die ihrerseits starr mit dem Grubber-Rahmen 3 verbunden sind. Der Zinken 1 ist hohl und besteht aus einem Quadratrohr. Auf diese Weise ergibt sich ein federnder Zinken mit ausreichender Festigkeit und geringem Gewicht.

Der Zinken 1 ist über Zapfen 4 als Radiallager auf einer von den Platten 2 gehaltenen Achse 5 gelagert und demgemäß in der Lage, eine Kreisbewegung um die Achse 5 herum zu vollführen.

Die Lagerzapfen 4 sind durch Einpressen in Wandungsöffnungen mit dem Zinken 1 verbunden, der mit einer Abstandshülse 6 versehen ist. Eine elastische Materialverformung an einer vorzugsweise konischen Kontaktfläche 7 zwischen den Lagerzapfen 4 und dem Zinken 1 sorgt für den notwendigen Reibungsschluß und so für eine ausreichende Verbindung zwischen dem Zinken und den Lagerzapfen. Diese Art von Befestigung zwischen den Lagerzapfen 4 und dem Zinken 1 gewährleistet die notwendige Konstruktionsfestigkeit und vermeidet die mit anderen Befestigungsmöglichkeiten verbundenen Spannungskonzentrationen.

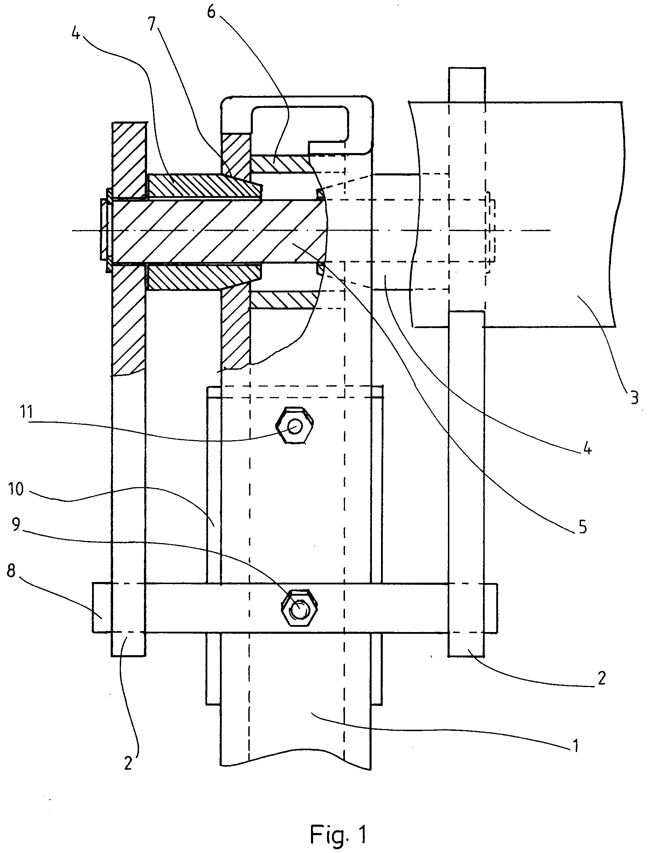

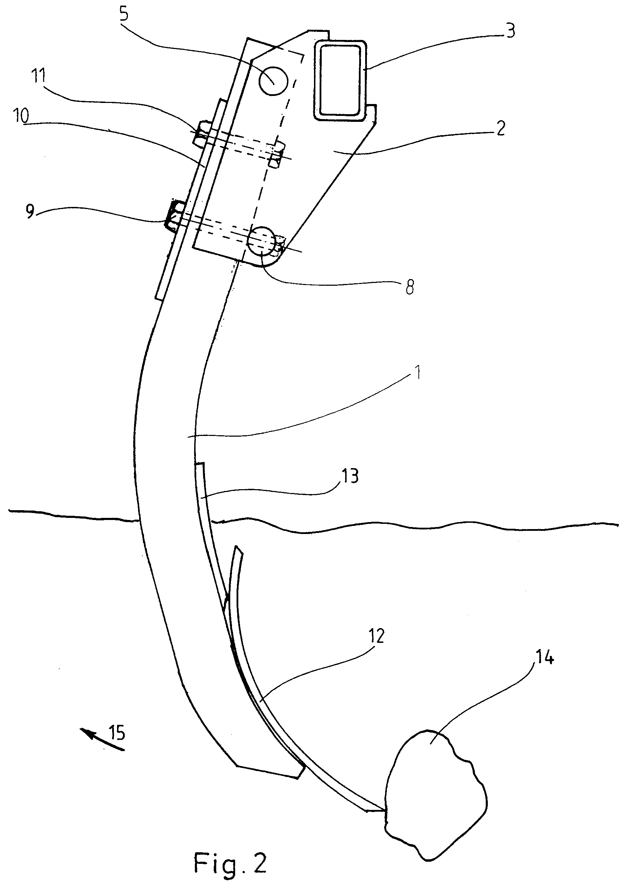

Der Zinken nach Fig. 1 und 2 wird mittels eines mit den Platten 2 verbundenen Zapfens 8 in seiner Arbeitsstellung gehalten. Dabei greift als Steinsicherung ein sich in Längsrichtung erstreckender Sicherheitsbolzen durch den Zapfen 8, der bei einer vorgegebenen Schwellenkraft zu Bruch geht. Ist der Sicherheitsbolzen 9 angezogen, mithin vorgespannt, liegt der Zinken fest an dem Zapfen 8 an und demgemäß an einer Schwenkbewegung um die Achse 5 gehindert. Eine Versteifungsplatte 10 ist mittels Schrauben 11 an der Rückseite des Zinkens 1 positioniert und dient gleichzeitig als Basis und Widerlage für den Sicherheitsbolzen 9. Der Zinken ist des, weiteren mit einem den Boden bearbeitenden Schar 12 und mindestens einer Verschleißplatte 13 versehen, die den Zinken gegen Abrieb und ein Brechen schützt. Der sich verändernde Bodenwiderstand führt zu Vibrationen und federnden Durchbiegungen des Zinkens; dies ist deswegen erwünscht, weil derartige Zinkenbewegungen zu einem geringeren Zugkraftbedarf für den Grubber führen. Ist der Bodenwiderstand zu groß, wenn der Zinken beispielsweise auf einen festen Boden oder einen größeren Stein 14 trifft, bricht der Sicherheitsbolzen 9 und schwenkt der Zinken 1 um die Achse 5, wie dies der Pfeil 15 in Fig. 2 veranschaulicht; er entfernt sich dabei von dem Bodenhindernis und vermeidet so Beschädigungen auch an anderen Teilen des Grubbers. Im Falle eines Brechens des Sicherheitsbolzens 9 braucht lediglich ein neuer Sicherheitsbolzen eingesetzt zu werden, ehe die Bodenbearbeitung fortgesetzt werden kann.

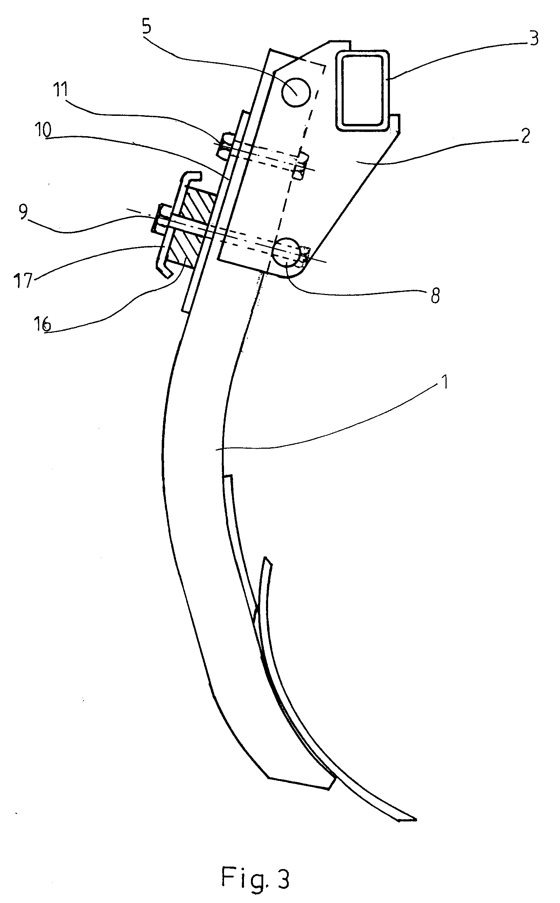

Bei dem Zinken nach Fig. 3 überträgt sich die Zugkraft des Sicherheitsbolzens 9 mittels eines Federstücks 16 bzw. Puffers auf den Zinken. Das Federstück 16 besteht vorzugsweise aus Gummi und einer Halteplatte 17; an seiner Stelle können andere federnde Körper verwendet werden. Ein solcher federnder Körper erlaubt eine größere Bewegung des Zinkens und verringert des weiteren den Zugkraftbedarf. Außerdem überträgt sich die Zinkenvibration in geringerem Maße auf den Grubber-Rahmen 3.

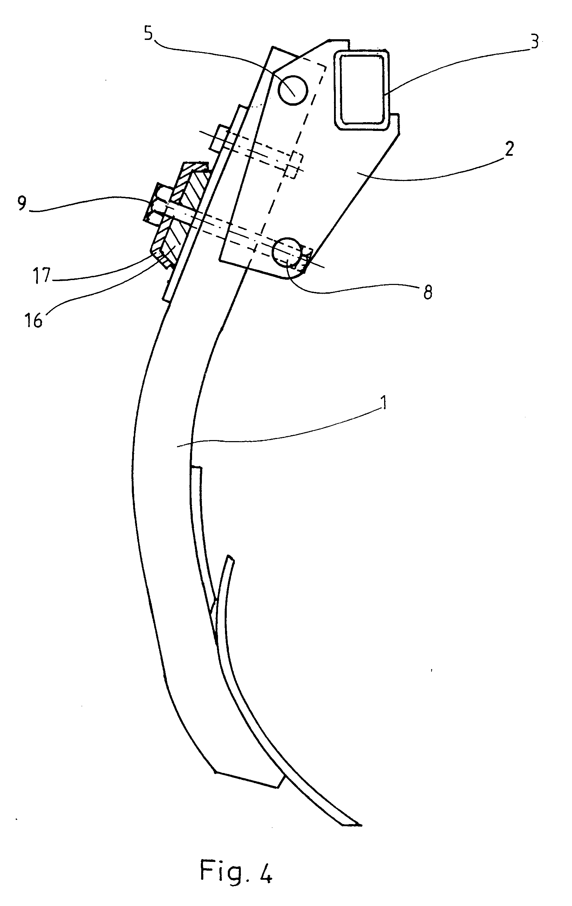

Fig. 4 zeigt den Zinken nach einer Schwenkbewegung um die Achse 5 im Verhältnis zu den Platten 2 und dem Rahmen 3 mit dem deformierten Federstück 16. Da der Zapfen 8 drehbar in den Platten 2 gelagert ist, nimmt der Sicherheitsbolzen 9 eine Lage ein, in der er im wesentlichen nur Zugkräften aus der Schwenkbewegung des Zinkens um die Achse 5 unterliegt. Bewegt sich der Zinken über seine in Fig. 4 dargestellte Lage hinaus, kommt es zu einem Bruch des Sicherheitsbolzens 9.

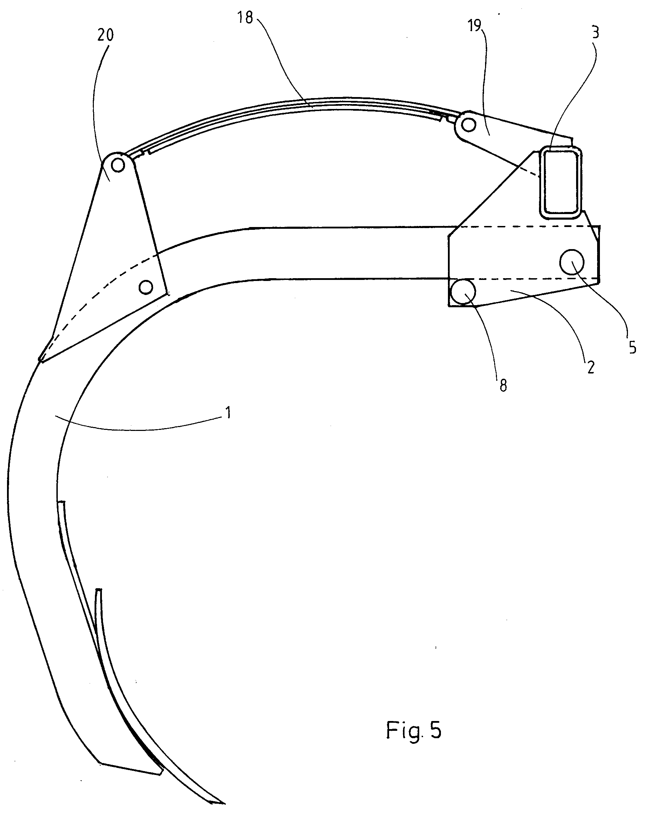

Bei dem Ausführungsbeispiel der Fig. 5 erstreckt sich eine Blattfeder 18 mit Vorspannung, zwischen einer am Grubber-Rahmen 3 befestigten Konsole 19 und einer am Zinken 1 angeordneten Konsole 20, die den Zinken 1 gegen den Zapfen 8 drückt und so in seiner Arbeitsposition hält. Trifft der Zinken auf ein Bodenhindernis, vollführt er eine solche Schwenkbewegung um die Achse 5, daß er das Bodenhindernis passieren kann, während ihn die Feder 18 zurück in seine Arbeitsstellung bringt, wenn er an dem Bodenhindernis vorbei ist.

## Patentansprüche

1. Grubber mit um eine Achse (5) verschwenkbar gelagerten Zinken (1) mit hohlkörperförmigem Querschnitt, dadurch gekennzeichnet, daß der Zinken (1) mit in Wandungsöffnungen des Zinkens (1) eingreifenden Lagerzapfen (4) verpreßt ist.

2. Grubber nach Anspruch 1, gekennzeichnet durch eine konische Berührungsfläche (7) zwischen den Lagerzapfen (4) und der Zinkenwandung.

3. Grubber nach Anspruch 1 oder 2, dadurch gekennzeichnet, daß der Zinken (1) aus einem Quadratrohr besteht.

4. Grubber nach einem der Ansprüche 1 bis 3, dadurch gekennzeichnet, daß der Zinken (1) mittels eines Sicherheitsbolzens (9) in seiner Arbeitslage gehalten wird.

5. Grubber nach einem der Ansprüche 1 bis 4, dadurch gekennzeichnet, daß die Schwenkbewegung des Zinkens (1) über ein Federstück (16) begrenzt wird.

6. Grubber nach Anspruch 5, dadurch gekennzeichnet, daß bei einer Schwenkbewegung die zwischen dem Zinken (1) und dem Sicherheitsbolzen (9) wirksame Kraft durch das Federstück (16) geht und der Zinken bei variierendem Bodenwiderstand im Rahmen der Nachgiebigkeit des Federstücks um die Achse (5) schwenkt.

7. Grubber nach einem der Ansprüche 1 bis 6, gekennzeichnet durch eine den Zinken (1) in seiner Arbeitslage haltende Feder (18), deren Arbeitsbereich eine Schwenkbewegung des Zinkens um die Achse (5) und ein Ausweichen des Zinkens sowie dessen Rückkehr in die Arbeitslage erlaubt.

8. Grubber nach einem der Ansprüche 4 bis 7, dadurch gekennzeichnet, daß der Sicherheitsbolzen (9) verschwenkbar gelagert ist.

## Claims

1. A cultivator having a tine (1) of hollow cross section mounted in bearings to pivot about an axle (5), characterised in that the tine (1) is pressed between bearing stems (4) which engage in openings in the walls of the tine (1).

2. A cultivator according to claim 1, characterised by having a conical contact surface (7) between the bearing stem (4) and the tine wall.

3. A cultivator according to claim 1 or claim 2, characterised in that the tine (1) consists of a square section tube.

4. A cultivator according to one of claims 1 to 3, characterised in that the tine (1) is held in its working position by means of a safety bolt (9).

5. A cultivator according to one of claims 1 to 4, characterised in that the pivoting movement of the tine (1) is limited by means of a resilient member (16).

6. A cultivator according to claim 5, characterised in that in the case of a pivoting movement the force acting between the tine (1) and the safety bolt (9) passes through the resilient member (16), and with varying ground resistance the tine moves about the axle (5) within the scope of the flexibility of the resilient member.

7. A cultivator according to one of claims 1 to 6, characterised by having a spring (18) which holds the tine (1) in its working position, the working range of which permits a pivoting movement of the tine about the axle (5) and a deflection of the tine and its return into the working position.

8. A cultivator according to one of claims 4 to 7, characterised in that the safety bolt (9) is pivotally mounted.

## Revendications

1. Cultivateur équipé de dents (1) montées pivotantes autour d'un axe (5) et ayant en section droite la forme d'un corps creux, caractérisé en ce que les dents (1) sont montées pivotantes à l'aide de tourillons (4) enfoncés sous pression dans des ouvertures ménagées dans la paroi de la dent (1).

2. Cultivateur selon la revendication 1, caractérisé par une surface de contact conique (7) entre les tourillons (4) et la paroi de la dent.

3. Cultivateur selon la revendication 1 ou 2, caractérisé en ce que la dent (1) est formée d'un tube de section carrée.

4. Cultivateur selon une des revendications 1 à 3, caractérisé en ce que la dent (1) est maintenue à sa position de travail au moyen d'un boulon de sécurité (9).

5. Cultivateur selon une des revendications 1 à 4, caractérisé en ce que le mouvement pivotant de la dent (1) est limité à l'aide d'un organe élastique (16).

6. Cultivateur selon la revendication 5, caractérisé en ce que, lors d'un mouvement d'oscillation, la force agissant entre la dent (1) et le boulon de sécurité (9), passe par l'organe élastique (16) et, en cas de variation de la résistance opposée par la terre, la dent pivote autour de l'axe (5) dans les limites de la flexibilité de l'organe élastique.

7. Cultivateur selon une des revendications 1 à 6, caractérisé par un ressort (18) qui maintient la dent (1) à sa position de travail et dont la plage de travail autorise un mouvement de pivotement de la dent autour de l'axe (5) et un effacement de la dent, ainsi que le retour de celle-ci à la position de travail.

8. Cultivateur selon une des revendications 4 à 7, caractérisé en ce que le boulon de sécurité (9) est monté pivotant ou oscillant.
